# EUROPEAN PATENT SPECIFICATION

(11) **EP 3 896 861 B1**
(45) Date of publication and mention of the grant of the patent: **04.10.2023**
(21) Application number: 19911691.4
(22) Date of filing: 21.01.2019
(51) Int. Cl.: H04B 1/707, H04B 1/7073, H04J 13/00, H04J 13/10

(54) **TRANSMISSION DEVICE AND TRANSMISSION METHOD**
ÜBERTRAGUNGSVORRICHTUNG UND ÜBERTRAGUNGSVERFAHREN
DISPOSITIF DE TRANSMISSION ET PROCÉDÉ DE TRANSMISSION

(43) Date of publication of application: 20.10.2021
(73) Proprietor: MITSUBISHI ELECTRIC CORPORATION, Chiyoda-ku Tokyo 100-8310 (JP)
(72) Inventor: NODA, Yasunori, Tokyo 100-8310 (JP); UCHIDA, Shigeru, Tokyo 100-8310 (JP)
(74) Representative: Pfenning, Meinig & Partner mbB
(86) International application number: PCT/JP2019/001632
(87) International publication number: WO 2020/152739

(56) References cited:
- JP-A- H09 504 670
- JP-A- H11 163 827
- JP-A- 2001 069 556
- CHOI JINHO ET AL: "Secure Multiple Access Based on Multicarrier CDMA With Induced Random Flipping", IEEE TRANSACTIONS ON VEHICULAR TECHNOLOGY, IEEE SERVICE CENTER, PISCATAWAY, NJ, US, vol. 66, no. 6, 1 June 2017 (2017-06-01), pages 5099-5108, XP011654008, ISSN: 0018-9545, DOI: 10.1109/TVT.2016.2623791 [retrieved on 2017-06-16]

## Description

### Field

The present invention relates to a transmission device and a transmission method for transmitting data using a spreading code.

### Background

In a wireless communication system, a technique of multiplexing and transmitting a plurality of signals using a spreading code may be used. The spreading code provides the wireless communication system with a function of multiplexing and transmitting a plurality of signals, a function of increasing the confidentiality of signals, and a function of preventing interception, pretention, and the like.

As a spreading code used for multiplex transmission, in general, it is necessary to select a code having a good autocorrelation property or cross-correlation property, and when a code set which does not satisfy these properties is used, interference between signals increases. What is meant by having a good autocorrelation property is that a peak of an autocorrelation value is sharp. What is meant by having a good cross-correlation property is that correlation between spreading codes is low. An increase in a spreading code length makes it possible to relatively freely design a series having a low code-by-code correlation. When the spreading code length is increased, it becomes difficult to estimate the spreading code, and thus the confidentiality is improved. Furthermore, when the spreading code length is increased, a spreading rate is improved, and due to an effect of a spreading gain, long-distance transmission becomes possible as compared with a communication method which does not use a spreading code.

In a global navigation satellite system (GNSS), a signal is used in which a spreading code length is increased in order to perform data transmission over an ultra-long distance, and a plurality of codes with different periods are overlaid, that is, superimposed, to perform a spreading process. Patent Literature 1 discloses a navigation system which uses pseudo-noise for a long-period spreading code. Because a correlation result of such a long-period spreading code is statistically derived, the dependence of a chip-by-chip correlation property tends to be small.

### Citation List

### Patent Literature

Patent Literature 1: Japanese Translation of PCT International Application Laid-open No. 2014-529217 CHOI JINHO ET AL: "Secure Multiple Access Based on Multicarrier CDMA with Induced Random Flipping", 1 June 2017, IEEE Transactions on Vehicular Technology, vol. 66, n. 6, pages 5099-5108, XP011654008, ISSN: 0018-9545, discloses secure multiple access based on multicarrier (MC) code division multiple access (CDMA) systems with induced random (chip) flipping of spreading sequence, which is suitable for machine type communications (MTC) .
JP H09 504670 A discloses a spread-spectrum communication system in which the energy output is more smoothly distributed than the length of the pseudo-random code would otherwise indicate. A spread-spectrum communication system in which the code sequence is pseudo-randomly inverted (205) on data-bit boundaries, so that the code sequence (204) appears longer, for energy spreading, that it otherwise would appear.

### Summary

### Technical Problem

However, when a long spreading code length is used for the navigation system described in Patent Literature 1, a time required for a synchronization process of a reception device is prolonged, which is problematic.

The present invention has been made in view of the above, and an object thereof is to obtain a transmission device which prevents an increase in a spreading code length.

### Solution to Problem

The invention is defined by the independent claims. Preferable embodiments are defined by the dependent claims.

### Advantageous Effects of Invention

The transmission device according to the present invention achieves an effect that it is possible to prevent an increase in a spreading code length.

### Brief Description of Drawings

FIG. 1 is a diagram illustrating a configuration of a wireless communication system according to a first example not claimed but helpful to understand the application.
FIG. 2 is a diagram illustrating functional blocks of a transmission device according to the first example.
FIG. 3 is a diagram illustrating a control circuit according to the first example.
FIG. 4 is a diagram illustrating functional blocks of a transmission device according to a first embodiment.
FIG. 5 is a diagram illustrating transmission formats of an information bit sequence, a primary code, and a secondary code according to the second embodiment.

### Description of Embodiments

Hereinafter, a transmission device and a transmission method according to each embodiment of the present invention will be described in detail with reference to the drawings. The present invention is not limited to the embodiments.

First example not claimed but helpful to understand the application.

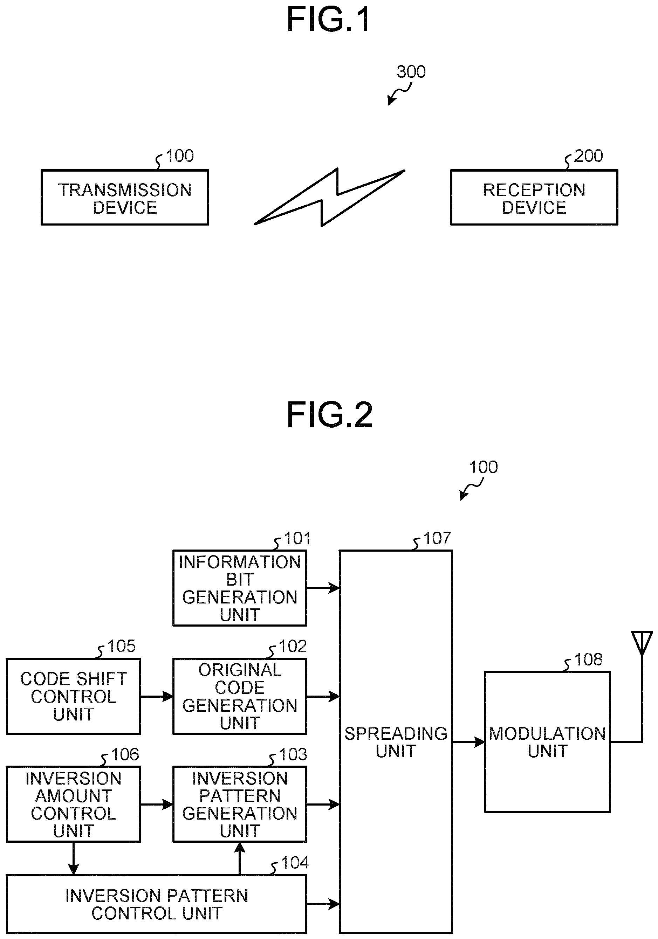

FIG. 1 is a diagram illustrating a configuration of a wireless communication system according to a first example. A wireless communication system 300 includes a transmission device 100 and a reception device 200. The transmission device 100 and the reception device 200 wirelessly communicate with each other. The transmission device 100 transmits signals to the reception device 200, and the reception device 200 receives the signals transmitted from the transmission device 100.

FIG. 2 is a diagram illustrating functional blocks of the transmission device according to the first example. The transmission device 100 includes an information bit generation unit 101, an original code generation unit 102, an inversion pattern generation unit 103, an inversion pattern control unit 104, a code shift control unit 105, an inversion amount control unit 106, a spreading unit 107, and a modulation unit 108.

The information bit generation unit 101 generates an information bit sequence indicating information to be transmitted to the reception device 200, and outputs the information bit sequence to the spreading unit 107. The original code generation unit 102 generates an original code having a long code length and outputs the original code to the spreading unit 107. Alternatively, the original code generation unit 102 generates an original code including a short-period code and a long-period code, and outputs the original code to the spreading unit 107. The long-period code is a code having a longer period than the short-period code and having a larger number of bits in one period than the short-period code. The short-period code is a code having a shorter period than the long-period code and having a smaller number of bits in one period than the long-period code. The code pattern of the original code generated by the original code generation unit 102 is not particularly limited, and a known sequence such as a Gold code may be used. The bit rate of the original code output from the original code generation unit 102, that is, chip rate, is a rate several times or more the bit rate of an information bit sequence output by the information bit generation unit 101. The inversion pattern generation unit 103 generates an inversion pattern for inverting a part of the original code. The inversion pattern is information indicating a position where a bit of the original code is inverted. A spreading code includes the original code and the inversion pattern.

The inversion pattern control unit 104 controls a position to be inverted in the inversion pattern generated by the inversion pattern generation unit 103. The code shift control unit 105 controls a code shift amount of the short-period code for each period of the short-period code. The inversion amount control unit 106 controls a maximum value of a ratio of bits to be inverted by the inversion pattern for each spreading code. The spreading unit 107 inverts a part of the original code using the inversion pattern. Furthermore, with respect to the information bit sequence and the spreading code, the spreading unit 107 performs multiplication by using non return to zero (NRZ), an XOR operation in a state of a bit sequence including 0 and 1, or an operation equivalent to either of these, thereby generating a data sequence directly spread by a binary code. The modulation unit 108 modulates the spread data sequence, and transmits the spread data sequence after modulation using an antenna. The antenna and the modulation unit 108 are collectively called a transmission unit.

The information bit generation unit 101, the original code generation unit 102, the inversion pattern generation unit 103, the inversion pattern control unit 104, the code shift control unit 105, the inversion amount control unit 106, the spreading unit 107, and the modulation unit 108 are realized by processing circuitry as an electronic circuit which performs each process.

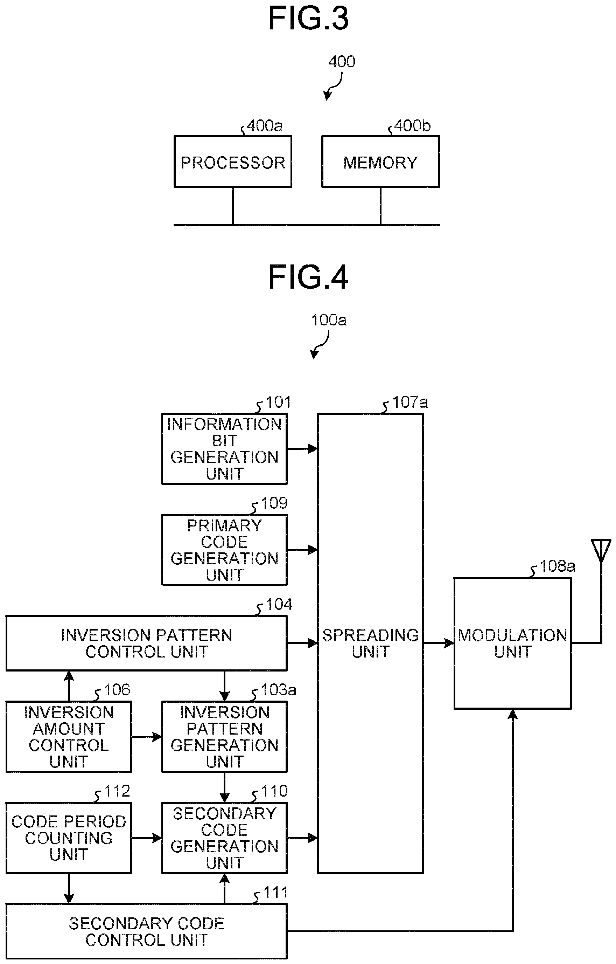

The processing circuitry may be dedicated hardware, or a control circuit including a memory and a central processing unit (CPU) which executes a program stored in the memory. Here, the memory corresponds to a nonvolatile or volatile semiconductor memory such as a random access memory (RAM), a read only memory (ROM), or a flash memory, a magnetic disk, an optical disk, or the like. FIG. 3 is a diagram illustrating a control circuit according to the first example. When the processing circuitry is a control circuit including a CPU, the control circuit is, for example, a control circuit 400 having a configuration illustrated in FIG. 3.

As illustrated in FIG. 3, the control circuit 400 includes a processor 400a which is a CPU and a memory 400b. When the present configuration is realized by the control circuit 400 illustrated in FIG. 3, the realization is achieved by the processor 400a reading and executing programs which are corresponding to each of processes and stored in the memory 400b. The memory 400b is also used as a temporary memory in each process performed by the processor 400a.

Detailed operations of the inversion pattern generation unit 103, the inversion pattern control unit 104, the code shift control unit 105, and the inversion amount control unit 106 will be described. The inversion pattern generation unit 103 generates an inversion pattern for inverting a part of a spreading code. The inversion pattern indicates a position of a bit to be inverted of the spreading code. As a method for the inversion pattern generation unit 103 to generate an inversion pattern, a method for generating a random bit pattern is exemplified. In a case of using the method, the inversion pattern control unit 104 controls the inversion pattern generation unit 103 so as to generate a random code having the same length as the code length of the spreading code. Specifically, the inversion pattern generation unit 103 generates an inversion pattern in which positions of bits are randomly inverted by using a random number generator such as a linear feedback shift register (LFSR). Here, the inversion pattern includes 0 and 1, and 1 indicates that a bit pattern of the spreading code is inverted; however, the meanings of 0 and 1 may be reversed. The inversion pattern control unit 104 can control the inversion pattern by using a period number of the spreading code, a chip position in a code cycle, or a specific periodic rule, in addition to the method for generating a random bit pattern.

In a case where the probabilities of 0 and 1 in the inversion pattern generated by the inversion pattern generation unit 103 are the same, 500 of bits of the original code are inverted by the inversion pattern. In this case, because the reception device 200 receives a bit sequence in which 500 of bits of the original code are inverted, power after despreading is reduced to be 6 dB or less, that is, halved. On the other hand, a device which tries to intercept a signal from the transmission device 100 and does not know a correct spreading code transmitted by the transmission device 100, tries to correlate different reception signals with each other to obtain information from a peak of the correlation in order to know the content of the spreading code or the code length of the spreading code. However, the transmission device 100 performs random position inversion for each period of the spreading code, and the randomness of the code is increased by the above process. Therefore, it is not possible for the device which does not know the correct spreading code transmitted by the transmission device 100 to obtain the peak of the correlation, which makes it difficult to obtain information on the spreading code. Therefore, the transmission device 100 can improve the confidentiality of a signal to be transmitted.

By increasing the randomness of the spreading code as described above, the transmission device 100 can improve the confidentiality. On the other hand, the above process causes a spreading gain loss of 6 dB with respect to the reception device 200, and depending on the wireless communication system 300, a method for reducing the spreading gain loss to be smaller than 6 dB is required. In order to reduce the spreading gain loss to be smaller than 6 dB, the inversion amount control unit 106 controls a maximum value of a ratio of bits to be inverted for each code period of the original code. As a specific control method of the inversion amount control unit 106, for example, a method is exemplified in which a maximum value of a ratio of inversion of even-numbered bits is set to 500 of an entire even-numbered bit pattern. Alternatively, as a specific control method of the inversion amount control unit 106, a method is exemplified in which a maximum value of a ratio of inversion of odd-numbered bits is set to 300 of an entire odd-numbered bit pattern.

Positions of bits to be inverted are determined by the random number generator included in the inversion pattern control unit 104, and a bit pattern in which the positions of the bits to be inverted are set to 1 is sent to the spreading unit 107. When the amount of inverted bits of the spreading code is controlled by the inversion pattern control unit 104 using such a control method, the inversion amount of the original code can be made 400 on average. Therefore, the transmission device 100 can generate a spreading code whose inversion amount is not constant for each overall code period of the spreading code, and the uncertainty of the spreading code is increased with respect to devices which do not know the correct spreading code transmitted by the transmission device 100, which makes it possible to improve the confidentiality. As a method for generating random numbers by the random number generator included in the inversion pattern control unit 104, time information may be used as a seed, or a value obtained by a physical phenomenon such as thermal noise or radiation mixed in a circuit may be used as a seed.

In addition, the configuration of the transmission device 100 described above can be used even when employing a method in which an information bit sequence and another information are transmitted on a code phase by code shift keying (CSK). For example, in a case where the original code is generated by multiplying a long-period code and a short-period code and an overall code period of the spreading code is a least common multiple of these two codes, the code shift control unit 105 controls a code shift amount of the short-period code for each period of the short-period code and modulates data depending on the code shift amount, thereby transmitting an information bit sequence and another data. The content of the data to be transmitted may be ordinary data or a pilot pattern, and may include an inversion pattern, a random seed which defines regularity, LFSR state information, polynomial information, and the like. If the inversion pattern information is transmitted, the reception device 200 can improve synchronization accuracy and shorten a time for a synchronization process. That is, as compared with a case where the inversion pattern information is not transmitted, the reception device 200 can obtain a large spreading gain and perform communication after synchronization is completed. As described above, even when the CSK is used for the short-period code, the spreading code inversion process can achieve an effect similar to that described above.

As described above, by inverting a part of an original code and transmitting the original code to the reception device 200, the transmission device 100 can improve the confidentiality while preventing an increase in a spreading code length, and improve the synchronization accuracy of the reception device 200. Therefore, in the wireless communication system 300 in which the transmission device 100 and the reception device 200 can establish a communication link, a code can be used which has a code length shorter than a long-period code that is designed to improve the confidentiality. The present invention utilizes the fact that the contribution of each chip of each code to a correlation value is relatively decreased in a transmission system using a spreading code having a long code length, and thereby the code can be made irregular without significantly disturbing an inter-code correlation, which enhances the confidentiality. The higher the spreading rate, the longer the code length. Because the wireless communication system 300 needs to use a spreading code having a long code length, the effect of the present invention cannot be achieved in a system having a maximum spreading rate of about several tens to several hundreds used in cellular communication or the like. Therefore, the wireless communication system 300 is desirably a transmission system having a spreading rate of 1000 to 10000 or more.

Although a transmission process including multiplexing of a plurality of signals performed by the transmission device 100 is not described in the present example, the transmission device 100 may have a function of multiplexing a plurality of signals. Examples of a multiplexing method include a frequency multiplexing method and a code multiplexing method. The transmission device 100 including a multiplexing unit which multiplexes a data sequence is used in a GNSS. When multiplex transmission is performed, position information on the inverted bits described above or information on a rule of positions of inverted bits may be embedded in another transmission wave to be transmitted. In this case, the transmission unit transmits the multiplexed data sequence, and the inversion pattern is included in the data sequence thus multiplexed.

### First Embodiment.

FIG. 4 is a diagram illustrating functional blocks of a transmission device according to a first embodiment. Components having the same functions as those in the first example are denoted by the same reference numerals as those in the first example, and redundant descriptions thereof will be omitted. A transmission device 100a includes the information bit generation unit 101, an inversion pattern generation unit 103a, the inversion pattern control unit 104, the inversion amount control unit 106, a spreading unit 107a, a modulation unit 108a, a primary code generation unit 109, a secondary code generation unit 110, a secondary code control unit 111, and a code period counting unit 112.

The primary code generation unit 109 generates a long-period code which is a primary code and outputs the long-period code to the spreading unit 107a. The inversion pattern generation unit 103a generates an inversion pattern and outputs the inversion pattern to the secondary code generation unit 110. The inversion pattern is included in information other than a short-period code. With the inversion pattern, the short-period code included in the secondary code is inverted. The secondary code generation unit 110 generates a secondary code using the short-period code and information other than the short-period code, and outputs the secondary code to the spreading unit 107a. The secondary code control unit 111 controls transmission of the secondary code generated by the secondary code generation unit 110. The code period counting unit 112 counts the number of times the short-period code is generated within a predetermined period included in the secondary code output by the secondary code generation unit 110, for example, within one period of the long-period code. With the use of a spreading code in which a primary code and a secondary code are overlaid and an information bit sequence, the spreading unit 107a performs multiplication by using NRZ, an XOR operation in a state of a bit sequence including 0 and 1, or an operation equivalent to either of these, thereby generating a data sequence directly spread by a binary code. Details of a format of the spreading code in which the primary code and the secondary code are overlaid will be described later. The modulation unit 108a modulates the spread data sequence after modulation into a modulation signal, and transmits the modulation signal using an antenna. Furthermore, the modulation unit 108a receives frequency offset information for adjusting a frequency of a transmission signal from the secondary code control unit 111, and adjusts a frequency of a signal to be transmitted using the frequency offset information. The primary code generation unit 109, the secondary code generation unit 110, the secondary code control unit 111, and the code period counting unit 112 are realized by the control circuit 400 as an electronic circuitry which performs each process.

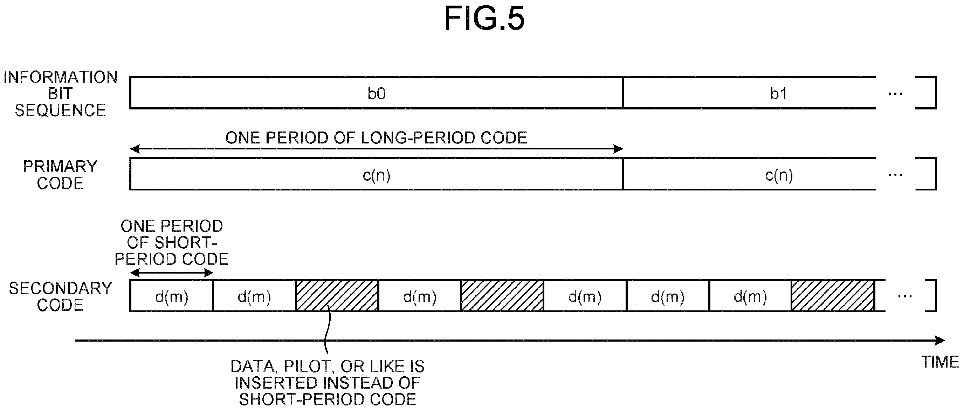

FIG. 5 is a diagram illustrating transmission formats of an information bit sequence, a primary code, and a secondary code according to the first embodiment. In FIG. 5, the horizontal axis represents time. FIG. 5 illustrates an information bit b0 and an information bit b1, a primary code c(n) having the same period as the information bit b0 and the information bit b1, and a secondary code including, in one period of the primary code c(n), four short period codes d(m) and two pieces of information other than the short-period code d(m).

In the present embodiment, information other than the short-period code is embedded and transmitted in a transmission period of the secondary code on the basis of a transmission format in which the spreading codes of the primary code and the secondary code are overlaid. Typically, the two spreading codes are repeatedly transmitted in respective periods, but in the present embodiment, the secondary code control unit 111 inserts information other than the short-period code between a plurality of the short-period codes for each code period of the secondary code. The information other than the short-period code is, for example, an inversion pattern generated for the short-period code by a process of bit inversion such as that described in the first example. Furthermore, in addition to the inversion pattern, the information other than the short-period code may include a specific pilot pattern, and may include information indicating this code transmission rule. In this process, the code period counting unit 112 counts the number of times the short-period code is generated, and in a case of a predetermined number of times, for example, in a case where the number of times of generation is an even number or an odd number, the secondary code control unit 111 performs control so that the information other than the short-period code is transmitted. In the above description, the short-period code and information other than the short-period code are switched in a time direction in short-period code units, but the switching may be performed in units obtained by dividing the short-period code into several units, in finer time units.

Furthermore, in the present embodiment, a frequency of a transmission signal modulated by the modulation unit 108a may be adjustable by the secondary code control unit 111, and the frequency may be slightly shiftable for each short-period code. In addition, a chirp-like frequency variation may be slightly added to the frequency of the transmission signal. As a result, in the reception device 200 including a correlator which performs frequency adjustment depending on the variation of a frequency of a transmission signal, a correlation peak of the transmission signal can be obtained. On the other hand, in a reception device which does not perform frequency adjustment, a slight phase rotation is accumulated during a correlation operation of a long-period code, and a correlation peak of the transmission signal cannot be obtained. Therefore, confidentiality is improved with respect to the reception devices which do not perform frequency adjustment. Regarding frequency settings, a discrete value may be set for each short code, or a chirp may be generated in which a very small shift amount is added for each chip to thereby varying the frequency slightly. At that time, a chirp in the positive direction and a chirp in the negative direction can be used properly for each time, and an average frequency value can be made equivalent to that of a transmission device which does not shift a frequency.

In the present embodiment, as compared with the first example, portions where codes are inverted are locally collected, and the degree of freedom of a format is reduced. However, because the portions where codes are inverted are locally collected, the portions where codes are inverted can be determined in advance, and the synchronization between the transmission device 100a and the reception device 200 is facilitated. Therefore, a synchronization process between the transmission device 100a and the reception device 200 is simplified, which makes it possible for the reception device 200 to synchronize with the transmission device 100a with a small amount of control information, and also makes it possible to improve the confidentiality, which is an effect aimed at by the present invention. In the present example, the spreading codes have two periods, but the above operation may be performed by using one or more codes with respect to three or more codes. In addition, it is similarly applicable also when a modulation method such as binary offset carrier (BOC) is used. The present embodiment can also be used in combination with the CSK transmission described in the first example.

The configurations described in each embodiment above are merely examples of the content of the present invention and can be combined with other known technology and part thereof can be omitted or modified without departing from the gist of the present invention.

### Reference Signs List

100, 100a transmission device; 101 information bit generation unit; 102 original code generation unit; 103, 103a inversion pattern generation unit; 104 inversion pattern control unit; 105 code shift control unit; 106 inversion amount control unit; 107, 107a spreading unit; 108, 108a modulation unit; 109 primary code generation unit; 110 secondary code generation unit; 111 secondary code control unit; 112 code period counting unit; 200 reception device; 300 wireless communication system; 400 control circuit; 400a processor; 400b memory.

## Claims

1. A transmission device (100a) comprising:
an information bit generation unit (101) configured to generate an information bit sequence;
a primary code generation unit (109) configured to generate a long-period code;
an inversion pattern control unit (104) configured to control a position where a bit is to be inverted in the inversion pattern generated by an inversion pattern generation unit (103a);
a modulation unit (108a) configured to modulate the spread data sequence and to transmit the spread data sequence after modulation;
a secondary code generation unit (110) configured to generate a secondary code that includes a short-period code having a shorter period than the long-period code and information other than the short-period code;
the inversion pattern generation unit (103a) configured to generate an inversion pattern used to invert the short-period code included in the secondary code;
a spreading unit (107a) configured to generate a spread data sequence using the information bit sequence, the secondary code and the long-period code;
a code period counting unit (112) configured to count a number of times the short period code is generated and to output the number of times of generation; and
a secondary code control unit (111) configured to control a position where information other than the short-period code is inserted between a plurality of the short-period codes for each period of the secondary code depending on the number of times of generation;
wherein the spreading unit is configured to generate the spread data sequence using a spreading code in which the long-period code and the secondary code are overlaid.

2. The transmission device (100a) according to claim 1, comprising an inversion amount control unit (106) configured to control a maximum value of a ratio of the bits to be inverted.

3. A transmission method performed by a transmission device (100a) that transmits data, the transmission method including:
a step of generating an information bit sequence;
a step of generating an long-period code;
a step of generating an inversion pattern, the inversion pattern being information indicating a position where a bit is to be inverted;
a step of generating a secondary code that includes a short-period code having a shorter period than the long-period code and information other than the short-period code;
a step of inverting the short-period code included in the secondary code using the inversion pattern;
a step of generating a spread data sequence using the information bit sequence, the secondary code and the long-period code;
a step of modulating the spread data sequence and transmitting the spread data sequence after modulation;
a step of counting a number of times the short period code is generated and to output the number of times of generation; and
a step of controlling a position where information other than the short-period code is inserted between a plurality of the short-period codes for each period of the secondary code depending on the number of times of generation;
wherein the spread data sequence is generated using a spreading code in which the long-period code and the secondary code are overlaid.

4. A control circuit (400) of a transmission device (100a) that transmits data, wherein the control circuit (400) includes a processor (400a) which is a central processing unit, CPU, and a memory (400b), the memory (400b) having instructions stored thereon which, when they are executed by the CPU cause the transmission device (100a) to perform:
a step of generating an information bit sequence;
a step of generating an long-period code;
a step of generating an inversion pattern, the inversion pattern being information indicating a position where a bit is to be inverted;
a step of generating a secondary code that includes a short-period code having a shorter period than the long-period code and information other than the short-period code;
a step of inverting the short-period code included in the secondary code using the inversion pattern;
a step of generating a spread data sequence using the information bit sequence, the secondary code and the long-period code;
a step of modulating the spread data sequence and transmitting the spread data sequence after modulation as the data;
a step of counting a number of times the short period code is generated and to output the number of times of generation; and
a step of controlling a position where information other than the short-period code is inserted between a plurality of the short-period codes for each period of the secondary code depending on the number of times of generation;
wherein the spread data sequence is generated using a spreading code in which the long-period code and the secondary code are overlaid.

5. A computer readable storage medium having stored thereon a program, which, when the program is executed by a control circuit (400) of a transmission device (100a), the control circuit comprising a processor (400a) which is a central processing unit, CPU, causes the transmission device (100a) to perform:
a step of generating an information bit sequence;
a step of generating an long-period code;
a step of generating an inversion pattern, the inversion pattern being information indicating a position where a bit is to be inverted;
a step of generating a secondary code that includes a short-period code having a shorter period than a long-period code and information other than the short-period code;
a step of inverting the short-period code included in the secondary code using the inversion pattern;
a step of generating a spread data sequence using the information bit sequence, the secondary code and the long-period code;
a step of modulating the spread data sequence and transmitting the spread data sequence after modulation as the data;
a step of counting a number of times the short period code is generated and to output the number of times of generation; and
a step of controlling a position where information other than the short-period code is inserted between a plurality of the short-period codes for each period of the secondary code depending on the number of times of generation;
wherein the spread data sequence is generated using a spreading code in which the long-period code and the secondary code are overlaid.

## Patentansprüche

1. Übertragungseinrichtung (100a), umfassend:
eine Informationsbit-Generierungseinheit (101), die eingerichtet ist, eine Informationsbitfolge zu generieren;
eine Primärcode-Generierungseinheit (109), die eingerichtet ist, einen langperiodischen Code zu generieren;
eine Invertierungsmuster-Steuerungseinheit (104), die eingerichtet ist, eine Position, an der ein Bit in dem von einer Invertierungsmuster-Generierungseinheit (103a) generierten Invertierungsmuster zu invertieren ist, zu steuern;
eine Modulationseinheit (108a), die eingerichtet ist, die gespreizte Datenfolge zu modulieren und die gespreizte Datenfolge nach der Modulation zu übertragen;
eine Sekundärcode-Generierungseinheit (110), die eingerichtet ist, einen Sekundärcode, der einen kurzperiodigen Code mit einer kürzeren Periode als der langperiodige Code enthält, und andere Informationen als den kurzperiodigen Code zu generieren;
wobei die Invertierungsmuster-Generierungseinheit (103a) eingerichtet ist, ein Invertierungsmuster zu generieren, das genutzt wird, um den im Sekundärcode enthaltenen kurzperiodigen Code zu invertieren;
eine Spreizeinheit (107a), die eingerichtet ist, eine gespreizte Datenfolge unter Verwendung der Informationsbitfolge, des Sekundärcodes und des langperiodischen Codes zu generieren;
eine Codeperiode-Zähleinheit (112), die eingerichtet ist, eine Anzahl von Malen, die der kurzperiodige Code generiert wird, zu zählen, und die Anzahl von Malen der Generierung auszugeben; und
eine Sekundärcode-Steuereinheit (111), die eingerichtet ist, eine Position, an der andere Informationen als der kurzperiodige Code zwischen einer Vielzahl der kurzperiodigen Codes für jede Periode des Sekundärcodes in Abhängigkeit von der Anzahl von Malen der Generierung eingefügt werden, zu steuern;
wobei die Spreizeinheit eingerichtet ist, die gespreizte Datenfolge unter Verwendung eines Spreizcodes, in dem der langperiodige Code und der Sekundärcode überlagert sind, zu generieren.

2. Übertragungseinrichtung (100a) nach Anspruch 1, umfassend eine Invertierungsbetrag-Steuereinheit (106), die eingerichtet ist, einen maximalen Wert eines Verhältnisses der zu invertierenden Bits zu steuern.

3. Übertragungsverfahren, das von einer Übertragungseinrichtung (100a), die Daten überträgt, durchgeführt wird, wobei das Übertragungsverfahren umfasst:
einen Schritt des Generierens einer Informationsbitfolge;
einen Schritt des Generierens eines langperiodischen Codes;
einen Schritt des Generierens eines Invertierungsmusters, wobei das Invertierungsmuster eine Information ist, die eine Position angibt, an der ein Bit zu invertieren ist;
einen Schritt des Generierens eines Sekundärcodes, der einen kurzperiodigen Code mit einer kürzeren Periode als der langperiodige Code und andere Informationen als den kurzperiodigen Code enthält;
einen Schritt des Invertierens des im Sekundärcode enthaltenen kurzperiodigen Codes unter Verwendung des Invertierungsmusters;
einen Schritt des Generierens einer gespreizten Datenfolge unter Verwendung der Informationsbitfolge, des Sekundärcodes und des langperiodigen Codes;
einen Schritt des Modulierens der gespreizten Datenfolge und Übertragens der gespreizten Datenfolge nach der Modulation;
einen Schritt des Zählens einer Anzahl von Malen, für welche der kurzperiodische Code generiert wird, und die Anzahl von Malen der Generierung auszugeben; und
einen Schritt des Steuerns einer Position, an der andere Informationen als der kurzperiodische Code zwischen einer Vielzahl der kurzperiodigen Codes für jede Periode des Sekundärcodes in Abhängigkeit von der Anzahl von Malen der Generierung eingefügt werden;
wobei die gespreizte Datenfolge unter Verwendung eines Spreizcodes generiert wird, in dem der langperiodische Code und der Sekundärcode überlagert sind.

4. Steuerschaltung (400) einer Übertragungseinrichtung (100a), die Daten überträgt, wobei die Steuerschaltung (400) einen Prozessor (400a), bei dem es sich um eine zentrale Verarbeitungseinheit, CPU, handelt, und einen Arbeitsspeicher (400b) enthält, wobei in dem Arbeitsspeicher (400b) Anweisungen gespeichert sind, die, bei Ausführung durch die CPU, die Übertragungseinrichtung (100a) veranlassen, durchzuführen:
einen Schritt des Generierens einer Informationsbitfolge;
einen Schritt des Generierens eines langperiodischen Codes;
einen Schritt des Generierens eines Invertierungsmusters, wobei das Invertierungsmuster eine Information ist, die eine Position angibt, an der ein Bit zu invertieren ist;
einen Schritt des Generierens eines Sekundärcodes, der einen kurzperiodigen Code mit einer kürzeren Periode als der langperiodige Code und andere Informationen als den kurzperiodigen Code enthält;
einen Schritt des Invertierens des im Sekundärcode enthaltenen kurzperiodigen Codes unter Verwendung des Invertierungsmusters;
einen Schritt des Generierens einer gespreizten Datenfolge unter Verwendung der Informationsbitfolge, des Sekundärcodes und des langperiodigen Codes;
einen Schritt des Modulierens der gespreizten Datenfolge und des Übertragens der gespreizten Datenfolge nach der Modulation als die Daten;
einen Schritt des Zählens einer Anzahl von Malen, für welche der kurzperiodische Code generiert wird, und die Anzahl von Malen der Generierung auszugeben; und
einen Schritt des Steuerns einer Position, an der andere Informationen als der kurzperiodische Code zwischen einer Vielzahl der kurzperiodigen Codes für jede Periode des Sekundärcodes in Abhängigkeit von der Anzahl von Malen der Generierung eingefügt werden;
wobei die gespreizte Datenfolge unter Verwendung eines Spreizcodes generiert wird, in dem der langperiodische Code und der Sekundärcode überlagert sind.

5. Computerlesbares Speichermedium, auf dem ein Programm gespeichert ist, das, wenn das Programm von einer Steuerschaltung (400) einer Übertragungseinrichtung (100a) ausgeführt wird, wobei die Steuerschaltung einen Prozessor (400a) umfasst, der eine zentrale Verarbeitungseinheit, CPU, ist, die Übertragungseinrichtung (100a) veranlasst, durchzuführen:
einen Schritt des Generierens einer Informationsbitfolge;
einen Schritt des Generierens eines langperiodischen Codes;
einen Schritt des Generierens eines Invertierungsmusters, wobei das Invertierungsmuster eine Information ist, die eine Position angibt, an der ein Bit zu invertieren ist;
einen Schritt des Generierens eines Sekundärcodes, der einen kurzperiodigen Code mit einer kürzeren Periode als ein langperiodiger Code und andere Informationen als den kurzperiodigen Code enthält;
einen Schritt des Invertierens des im Sekundärcode enthaltenen kurzperiodigen Codes unter Verwendung des Invertierungsmusters;
einen Schritt des Generierens einer gespreizten Datenfolge unter Verwendung der Informationsbitfolge, des Sekundärcodes und des langperiodigen Codes;
einen Schritt des Modulierens der gespreizten Datenfolge und des Übertragens der gespreizten Datenfolge nach der Modulation als die Daten;
einen Schritt des Zählens einer Anzahl von Malen, für welche der kurzperiodische Code generiert wird, und die Anzahl von Malen der Generierung auszugeben; und
einen Schritt des Steuerns einer Position, an der andere Informationen als der kurzperiodische Code zwischen einer Vielzahl der kurzperiodigen Codes für jede Periode des Sekundärcodes in Abhängigkeit von der Anzahl von Malen der Generierung eingefügt werden;
wobei die gespreizte Datenfolge unter Verwendung eines Spreizcodes generiert wird, in dem der langperiodische Code und der Sekundärcode überlagert sind.

## Revendications

1. Dispositif de transmission (100a) comprenant :
une unité de génération de bit d'information (101) configurée pour générer une séquence de bits d'information ;
une unité de génération de code primaire (109) configurée pour générer un code à longue période ;
une unité de contrôle de motif d'inversion (104) configurée pour contrôler une position où un bit doit être inversé dans le motif d'inversion généré par une unité de génération de motif d'inversion (103a) ;
une unité de modulation (108a) configurée pour moduler la séquence de données dispersée et pour transmettre la séquence de données dispersée après modulation ;
une unité de génération de code secondaire (110) configuré pour générer un code secondaire qui comprend un code à période courte ayant une période plus courte que le code à longue période et des informations autres que le code à période courte ;
l'unité de génération de motif d'inversion (103a) étant configurée pour générer un motif d'inversion utilisé pour inverser le code à période courte inclus dans le code secondaire ;
une unité de dispersion (107a) configurée pour générer une séquence de données dispersée au moyen de la séquence de bits d'information, du code secondaire et du code à longue période ;
une unité de comptage de période de code (112) configurée pour compter un nombre de fois que le code à période courte est généré et la délivrance en sortie du nombre de fois de la génération ; et
une unité de contrôle de code secondaire (111) configurée pour contrôler une position où des informations autres que le code à période courte sont insérées entre une pluralité des codes à période courte pour chaque période du code secondaire suivant le nombre de fois de la génération ;
dans lequel l'unité de dispersion est configurée pour générer la séquence de données dispersée au moyen d'un code de dispersion dans lequel le code à longue période et le code secondaire sont superposés.

2. Dispositif de transmission (100a) selon la revendication 1, comprenant une unité de contrôle de quantité d'inversion (106) configurée pour contrôler une valeur maximale d'un rapport des bits à inverser.

3. Procédé de transmission conduit par un dispositif de transmission (100a) qui transmet des données, le procédé de transmission comprenant :
une étape de génération d'une séquence de bits d'information ;
une étape de génération d'un code à longue période ;
une étape de génération d'un motif d'inversion, le motif d'inversion étant des informations indiquant une position où un bit doit être inversé ;
une étape de génération d'un code secondaire qui comprend un code à période courte ayant une période plus courte que le code à longue période et des informations autres que le code à période courte ;
une étape d'inversion du code à période courte inclus dans le code secondaire au moyen du motif d'inversion ;
une étape de génération d'une séquence de données dispersée au moyen de la séquence de bits d'information, du code secondaire et du code à longue période ;
une étape de modulation de la séquence de données dispersée et de transmission de la séquence de données dispersée après modulation ;
une étape de comptage d'un nombre de fois que le code à période courte est généré et la délivrance en sortie du nombre de fois de la génération ; et
une étape de contrôle d'une position où des informations autres que le code à période courte sont insérées entre une pluralité des codes à période courte pour chaque période du code secondaire suivant le nombre de fois de la génération ;
dans lequel la séquence de données dispersée est générée au moyen d'un code de dispersion dans lequel le code à longue période et le code secondaire sont superposés.

4. Circuit de commande (400) d'un dispositif de transmission (100a) qui transmet des données, le circuit de commande (400) comprenant un processeur (400a) qui est une unité centrale, CPU, et une mémoire (400b), la mémoire (400b) ayant des instructions stockées sur celle-ci qui, lorsqu'elles sont exécutées par la CPU, amènent le dispositif de transmission (100a) à effectuer :
une étape de génération d'une séquence de bits d'information ;
une étape de génération d'un code à longue période ;
une étape de génération d'un motif d'inversion, le motif d'inversion étant des informations indiquant une position où un bit doit être inversé ;
une étape de génération d'un code secondaire qui comprend un code à période courte ayant une période plus courte que le code à longue période et des informations autres que le code à période courte ;
une étape d'inversion du code à période courte inclus dans le code secondaire au moyen du motif d'inversion ;
une étape de génération d'une séquence de données dispersée au moyen de la séquence de bits d'information, du code secondaire et du code à longue période ;
une étape de modulation de la séquence de données dispersée et transmission de la séquence de données dispersée après modulation des données ;
une étape de comptage d'un nombre de fois que le code à période courte est généré et la délivrance en sortie du nombre de fois de la génération ; et
une étape de contrôle d'une position où des informations autres que le code à période courte sont insérées entre une pluralité des codes à période courte pour chaque période du code secondaire suivant le nombre de fois de la génération ;
dans lequel la séquence de données dispersée est générée au moyen d'un code de dispersion dans lequel le code à longue période et le code secondaire sont superposés.

5. Support de stockage lisible par ordinateur sur lequel est stocké un programme, qui, lorsque le programme est exécuté par un circuit de commande (400) d'un dispositif de transmission (100a), le circuit de commande comprenant un processeur (400a) qui est une unité centrale, CPU, amène le dispositif de transmission (100a) à effectuer :
une étape de génération d'une séquence de bits d'information ;
une étape de génération d'un code à longue période ;
une étape de génération d'un motif d'inversion, le motif d'inversion étant des informations indiquant une position où un bit doit être inversé ;
une étape de génération d'un code secondaire qui comprend un code à période courte ayant une période plus courte qu'un code à longue période et des informations autres que le code à période courte ;
une étape d'inversion du code à période courte inclus dans le code secondaire au moyen du motif d'inversion ;
une étape de génération d'une séquence de données dispersée au moyen de la séquence de bits d'information, du code secondaire et du code à longue période ;
une étape de modulation de la séquence de données dispersée et transmission de la séquence de données dispersée après modulation des données ;
une étape de comptage d'un nombre de fois que le code à période courte est généré et la délivrance en sortie du nombre de fois de la génération ; et
une étape de contrôle d'une position où des informations autres que le code à période courte sont insérées entre une pluralité des codes à période courte pour chaque période du code secondaire suivant le nombre de fois de la génération ;
dans lequel la séquence de données dispersée est générée au moyen d'un code de dispersion dans lequel le code à longue période et le code secondaire sont superposés.
